# DEMANDE DE BREVET EUROPEEN

(11) **EP 1 266 572 A2**
(43) Date de publication de la demande: **18.12.2002**
(21) Numéro de dépôt: 02292046.6
(22) Date de dépôt: 20.09.2000
(51) Int. Cl.: A22C 7/00

(54) **Moule destiné à contenir des produits alimentaires, tels que des jambons, lors de leur cuisson**

(30) Priorité: 24.09.1999 FR 9912112
(62) Demande divisionnaire de: 00964334.7
(71) Demandeur: ARMOR INOX SA, F-56430 Mauron (FR)
(72) Inventeur: Dreano, Claude, 56430 Mauron (FR)
(74) Mandataire: Maillet, Alain

(57) **Abrégé**

La présente invention concerne un moule destiné à contenir un produit alimentaire tel qu'un jambon lors de sa cuisson. Il est caractérisé en ce qu'il comporte au moins une cloison transversale (13) délimitant à l'intérieur dudit moule, d'une part, un volume principal (14) pour loger ledit jambon à cuire enfermé dans une poche principale (22) d'un emballage (20) et, d'autre part, au moins un volume secondaire (15) pour loger une poche latérale (23) dudit emballage (20) de manière que des passages (27) de communication entre la poche principale (22) et la ou chaque poche latérale (23) se trouvent au-dessus de la cloison (13) correspondante.

## Description

La présente invention concerne un moule destiné à contenir des produits alimentaires, tels que des jambons, lors de leur cuisson. Elle concerne également un ensemble empilable de moules constitué d'une pluralité de tels moules montés sur un cadre pourvu de piétements.

Pour sa cuisson, un jambon est placé dans un moule pour subir une élévation de température à environ 68° C pendant une durée de 10 heures environ. Pendant cette cuisson, il rejette un exsudat qui est essentiellement composé de saumure qui a servi à un saumurage préalable, de l'eau, etc.

Les exsudats rejetés peuvent être évacués directement du moule mais, alors, ils salissent lesdits moules avec les conséquences sanitaires qui en résultent.

Pour éviter cette évacuation directe, on a pensé à emballer les jambons préalablement à la cuisson dans des emballages fermés hermétiquement suffisamment lâches pour que seule une partie dudit emballage soit occupée par la pièce. Les exsudats rejetés stagnent dans les emballages jusqu'après la cuisson où ils sont alors évacués des emballages après le perçage de ceux-ci.

Cette solution n'est pas encore satisfaisante car elle a pour conséquence de donner aux jambons un aspect dérangeant le consommateur.

Une autre solution consiste à prévoir latéralement à une poche principale destinée à contenir le jambon à cuire une poche secondaire formée de manière que les exsudats s'y écoulent par gravité et y soient récupérés. On isole ensuite par soudure étanche puis par découpe chacune des deux poches.

La présente invention a pour but de proposer un nouveau moule qui permette de loger un emballage pour mettre en oeuvre une solution avec poche principale et au moins une poche secondaire.

Un tel moule se présente par exemple sous la forme d'une goulotte allongée. Un certain nombre de goulottes peut également être monté sur un cadre pourvu de piétements pour sa station.

A cet effet, la présente invention concerne un moule qui est caractérisé en ce qu'il comporte au moins une cloison transversale délimitant à l'intérieur dudit moule, d'une part, un volume principal pour loger ledit jambon à cuire enfermé dans une poche principale d'un emballage et, d'autre part, au moins un volume secondaire pour loger une poche latérale dudit emballage de manière que des passages de communication entre la poche principale et la ou chaque poche latérale se trouvent au-dessus de la cloison correspondante.

Selon une autre caractéristique de l'invention, ladite ou chaque cloison est pourvue d'échancrures latérales de manière à laisser libre le passage entre ladite cloison et la paroi latérale dudit moule pour des rabats latéraux de l'emballage logé dans ledit moule.

Selon une autre caractéristique de l'invention pour laquelle ledit moule est du type où un couvercle est prévu pour le coiffer, un espace pour ne pas pincer lesdits passages de communication est prévu entre ledit couvercle lorsqu'il est en position pour la cuisson et l'arête supérieure de ladite ou de chaque cloison.

Avantageusement, la longueur en développé de l'arête supérieure de la ou chaque cloison, d'une échancrure à une autre échancrure, est supérieure à la largeur totale de la collerette de l'emballage.

Selon une autre caractéristique de l'invention, ladite ou chaque cloison est telle que, dans ledit volume principal, à l'intersection entre la paroi latérale dudit moule et de ladite cloison, se trouvent des réserves prévues pour pouvoir loger des plis de l'emballage. Avantageusement, pour former lesdites réserves, la ou chaque cloison présente deux plis latéraux dirigés vers le fond du moule de manière à former deux parties pliées latérales inclinées vers l'extrémité du moule. L'angle d'inclinaison desdites parties pliées est avantageusement compris entre 15° et 30°.

Selon une autre caractéristique de l'invention, le couvercle qui est prévu pour coiffer ledit moule est de longueur inférieure à la distance entre deux cloisons transversales ou une cloison et une cloison d'extrémité.

La présente invention concerne également un ensemble empilable constitué d'une pluralité de moules montés sur un cadre pourvu de piétements, chaque moule étant conforme à un moule tel qu'il vient d'être décrit.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 est une vue en perspective d'un ensemble empilable de moules selon la présente invention,
La Fig. 2 est une vue en perspective d'un emballage destiné à contenir un jambon et qui est utilisé avec un moule selon la présente invention,
La Fig. 3 est une vue en coupe longitudinale selon un plan médian d'un moule selon la présente invention dans lequel est logé un emballage conforme à l'emballage représenté à la Fig. 2,
La Fig. 4 est une vue en plan d'une cloison transversale d'un moule selon la présente invention, et
La Fig. 5 est une vue de dessus d'un moule selon l'invention dans lequel est logé un emballage conforme à l'emballage représenté à la Fig. 2.

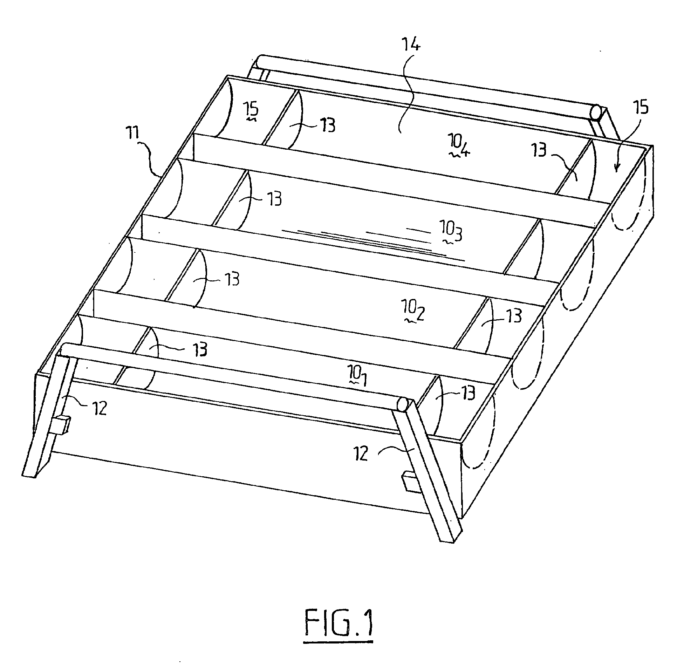

L'ensemble empilable de la Fig. 1 comprend quatre moules 10₁ à 10₄ selon la présente invention sous forme de goulottes longitudinales à profil en U au fond arrondi qui sont disposées côte à côte longitudinalement. Ces goulottes 10₁à 10₄ sont solidarisées par leurs extrémités respectives à un cadre 11 sensiblement rectangulaire. Le cadre 11a son arête supérieure sensiblement au même niveau que celles des parois latérales des moules 10₁ à 10₄.

A deux parois opposées du cadre 11 supportant les goulottes 10₁ à 10₄, sont respectivement soudés deux piétements 12 constitués chacun, près de leurs extrémités, par deux pieds identiques.

L'ensemble représenté à la Fig. 1 est prévu pour être empilé sur un autre ensemble identique.

On notera que, bien que la présente description concerne un ensemble de moules montés sur un cadre, la présente invention concerne aussi bien un tel ensemble qu'un moule simple.

Comme on le verra par la suite, chaque moule 10₁ à 10₄ est prévu de moyens (non représentés à la Fig. 1) permettant d'exercer une pression sur le produit qu'il contient. Par exemple, sous chaque moule 10₁ à 10₄, est monté, par l'intermédiaire d'éléments élastiques comme des ressorts, un couvercle. Lorsque deux ensembles sont empilés l'un sur l'autre, les couvercles sous les goulottes de l'ensemble supérieur coiffent les goulottes de l'ensemble inférieur ce qui a pour effet de tasser les produits que ces dernières contiennent.

Selon la présente invention, chaque moule 10₁ à 10₄ est pourvu au voisinage de chacune de ses extrémités d'une cloison transversale 13 délimitant ainsi, à l'intérieur dudit moule 10₁ à 10₄, un volume principal 14 et deux volumes secondaires 15 de plus faible contenance.

L'invention peut également prévoir une seule cloison transversale 13 qui délimitera donc un volume principal 14 et un seul volume secondaire 15.

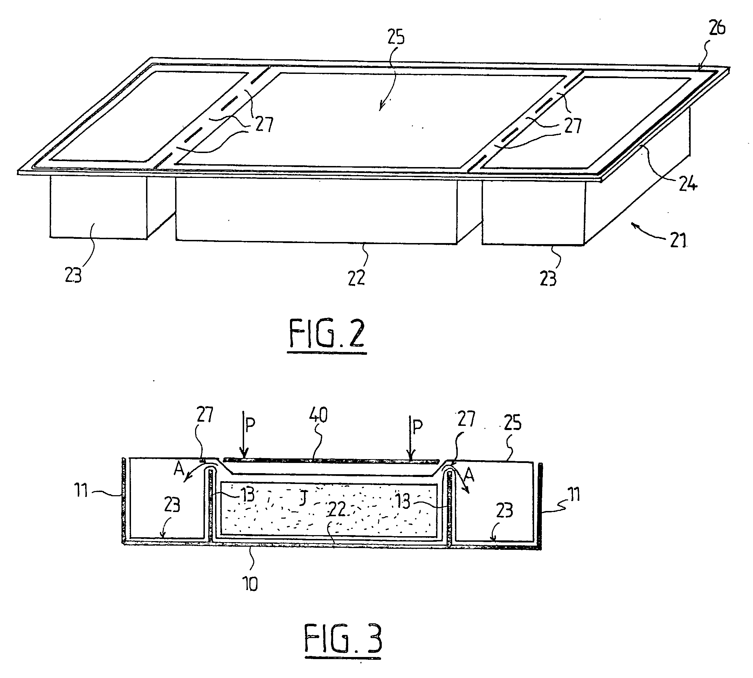

Ces volumes 14 et 15 ainsi délimités sont prévus pour recevoir un emballage 20, dont un exemple de réalisation est maintenant décrit en relation avec la Fig. 2.

Cet emballage 20 comporte une partie inférieure 21 essentiellement constituée d'une poche principale 21 destinée à contenir le jambon et de deux poches latérales 23 disposées à chaque extrémité de ladite poche principale 21. La partie inférieure 21 est pourvue, dans sa partie supérieure, d'une collerette 24 sensiblement dans un même plan faisant le tour des poches principale et latérales. L'emballage 21 est operculé au moyen d'un film d'operculage 25 reposant sur l'ensemble de la collerette 24. On a représenté en traits forts le cordon de soudure 26 entre la partie inférieure 21 de l'emballage et le film d'operculage 25. On constate que ce cordon 26 présente des interruptions 27 qui forment ainsi des communications entre, d'une part, la poche principale 22 et, d'autre part, l'une et l'autre des poches latérales 22 et 23.

A titre d'exemple, la partie inférieure 21 est préformée par thermoformage et est operculée, au moyen du film 25, après introduction du jambon à cuire dans la poche principale 22.

On a représenté à la Fig. 3 une coupe dans un plan médian longitudinal d'un moule 10 selon l'invention pourvu de parois d'extrémité du cadre 11 et de ses cloisons transversales 13. La poche principale 22 contenant le jambon est logée dans le volume 14 du moule 10 entre les cloisons transversales 13, alors que les poches latérales 23 sont respectivement logées dans les volumes 15 entre lesdites cloisons 13 et les parois d'extrémité les plus proches 11.

Dans le cas où le moule ne comporterait qu'une seule cloison 13, l'emballage 20 qu'il est destiné à loger ne comporterait qu'une seule poche latérale 23. La poche principale 22 contenant le jambon J serait alors logée entre une paroi d'extrémité du moule et la cloison transversale 13.

Le moule 10 est coiffé d'un couvercle 40 qui est pourvu de moyens (non représentés) permettant d'appliquer une pression P sur le jambon qui est contenu dans la poche principale 22. Par exemple, le couvercle 40 est fixé sur le fond d'un moule 10 qui vient se superposer au moule représenté et qui, de ce fait, exerce la pression P. Eventuellement, un système à ressort peut être prévu pour exercer cette pression.

Lors de la cuisson du jambon, les exsudats, sous l'effet de la pression P exercée sur le jambon qui est contenu dans la poche principale 22, sont éjectés par les passages 27 constitués par interruption du cordon de soudure 26 entre le film 25 et la collerette 24 et passent (voir les flèches A) dans les poches latérales 23.

Le pressage des jambons dans les moules 10 facilite la récupération des exsudats dans les poches latérales 23.

A la Fig. 3, les espaces entre les cloisons 13 et la paroi de la poche principale 22 et entre le jambon J et cette même paroi sont exagérés en dimensions pour une meilleure lisibilité de la Fig.

Il en est de même de l'espace entre le couvercle 40 et le film 25 ainsi que celui entre le film 25 et le jambon J.

En effet, on comprendra que les cloisons transversales 13 sont prévues pour servir de parois d'extrémité au jambon logé dans la poche principale 22 et qu'ainsi, il se trouve en appui contre elles, via la paroi de la poche principale 22. Dans le cas où le moule serait équipé d'une seule cloison 13, le jambon J se trouverait en appui contre ladite cloison 13 et une paroi d'extrémité dudit moule 10.

De même, le couvercle 40 exerce une pression sur le jambon J avec lequel il est en contact.

Par ailleurs, on peut constater que les cloisons transversales 13 sont positionnées de manière à se trouver dans l'espace compris entre la poche principale 22 et les poches latérales 23 lorsque ledit emballage 20 se trouve à l'intérieur du moule 10.

On notera que le couvercle 40 a, dans l'exemple de réalisation représenté à la Fig. 3, une longueur qui est légèrement inférieure à la distance qui sépare les deux cloisons 13 (ou une cloison 13 et une cloison d'extrémité dans le cas où le moule n'est pourvu que d'une seule cloison). Ainsi, en exerçant sa pression sur le jambon 13 contenu dans la poche principale 22, il est possible que le couvercle 40 puisse descendre au-dessous du niveau de l'arête supérieure 13a de chaque cloison 13.

Dans un autre mode de réalisation, le couvercle 40 coiffe l'ensemble de la longueur du moule 10. On comprendra qu'il sera alors nécessaire de réserver un jeu relativement important entre l'arête supérieure de la cloison transversale 13 et le couvercle de pressage 40 en position de pressage, de manière à ne pas pincer les passages 27 prévus entre la poche principale 22 et les poches à exsudats 23.

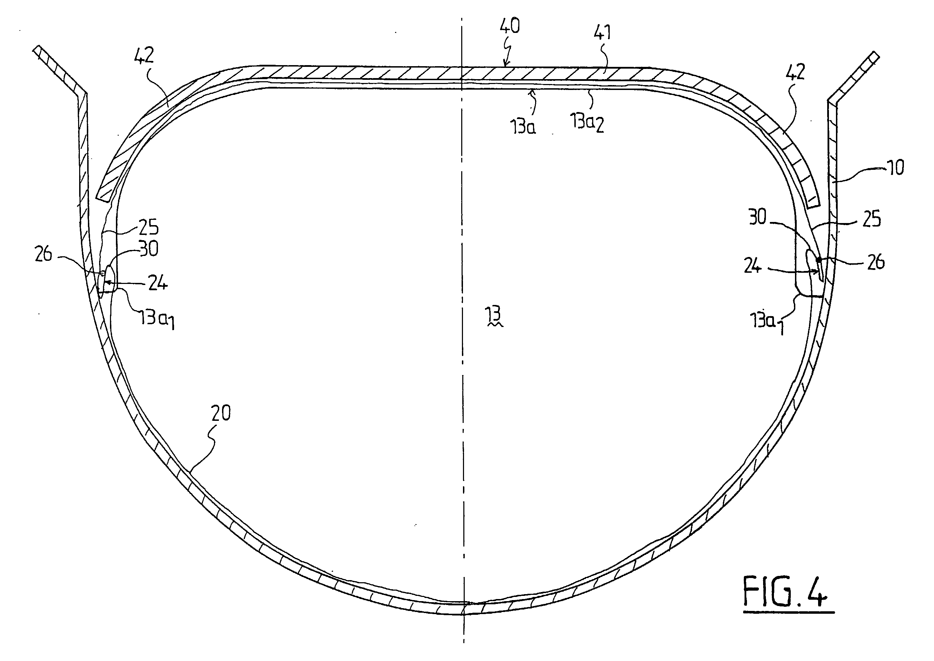

On a représenté à la Fig. 4 en coupe selon un plan transversal un moule 10 qui présente une section demi-circulaire prolongée par deux courtes parties de parois verticales et terminées par un rabat vers l'extérieur. On a également représenté un couvercle 40 qui présente une forme sensiblement plane dans sa partie médiane 41 et qui présente des parties latérales 42 en arcs de cercle. Ce type de moule et de couvercle est prévu pour la cuisson de jambon de sections arrondies.

L'emballage 20 qui est prévu pour être logé dans un tel moule 10 doit prendre sa forme et celle du couvercle 40. Pour ce faire, au moment où il est placé avec le jambon J dans le moule 10, l'emballage 20 doit présenter des rabats latéraux 30 contre la paroi latérale du moule 10.

On notera que, pour obtenir ce rabat 30, l'emballage 20 doit être plié au niveau de la collerette 24.

On a représenté à la Fig. 4, la collerette 24 qui est rabattue contre la paroi du moule 10, ainsi que le film 25 et le cordon de soudure 26 situé entre la collerette 24 et le film 25.

Pour permettre le libre passage des rabats 30, notamment au niveau des cloisons transversales 13 entre la poche principale 22 et les poches latérales 23, lesdites cloisons transversales 13 présentent une arête supérieure 13a présentant latéralement des échancrures 13a1 de manière à se trouver à une certaine distance de la paroi latérale du moule 10.

De même, pour assurer la libre circulation des exsudats lorsque ceux-ci transitent de la poche principale 22 à la poche latérale 23 et pour ne pas pincer les passages 27 par le couvercle 40, l'arête supérieure 13a présente une partie supérieure horizontale 13a2 prévue pour se trouver à une certaine distance du couvercle 40 lorsque celui-ci est en position pour presser le jambon J contenu dans la poche principale 22.

On notera que la longueur en développé de l'arête supérieure 13a de la cloison 13, d'une échancrure 13a1 à une autre échancrure 13a1, est supérieure à la largeur totale de la collerette 24 de l'emballage 20.

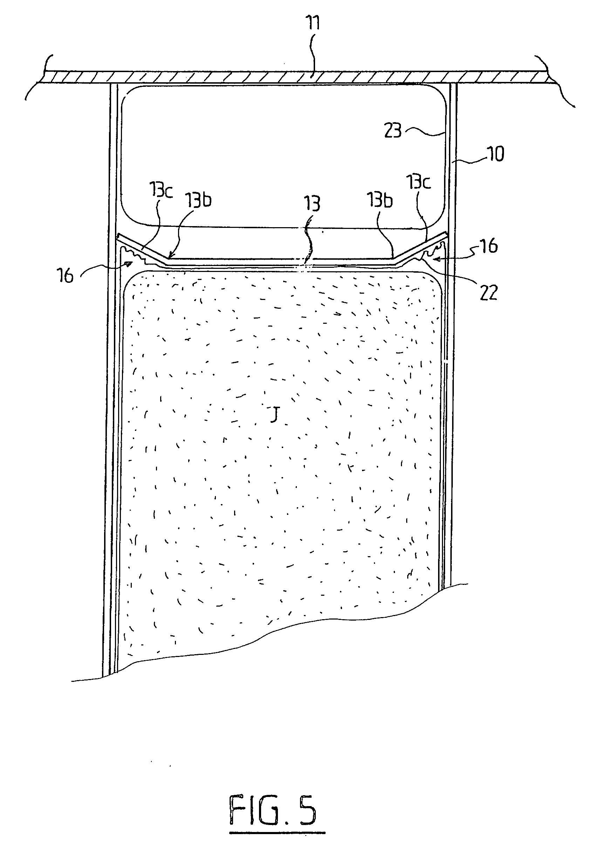

A la Fig. 5, on a représenté vue de dessus un moule 10 qui comporte une cloison transversale 13 selon l'invention. Cette cloison 13 présente deux plis latéraux 13b dirigés vers le fond de la goulotte de manière à former deux parties pliées latérales 13c inclinées vers l'extrémité du moule 10. L'angle d'inclinaison est avantageusement compris entre 15° et 30°. Ces parties latérales 13c forment en quelque sorte des réserves 16 dans lesquelles les plis de la poche principale 22 résultant, d'une part, de sa conformation à la forme demi-cylindrique du moule 10 et, d'autre part, à sa conformation à la forme arrondie du couvercle de pressage 40, viennent se loger. Il résulte de ces réserves que l'entame du jambon n'a pas sa forme détériorée du fait de la présence des plis de la poche principale contenant le jambon.

## Revendications

1. Moule de pressage (10) destiné à contenir un produit alimentaire tel qu'un jambon lors de sa cuisson, ledit moule (10) comprenant un couvercle (40) destiné à presser ledit produit alimentaire lors de sa cuisson afin qu'il puisse rejeter un exsudat, au moins une cloison transversale (13) délimitant à l'intérieur dudit moule (10), d'une part, un volume principal (14) pour loger ledit jambon à cuire enfermé dans une poche principale (22) d'un emballage (20) et, d'autre part, au moins un volume secondaire (15) pour loger une poche latérale (23) dudit emballage (20), l'arête supérieure de ladite ou chaque cloison étant telle qu'un espace est prévu entre elle et ledit couvercle (40) de manière à ne pas pincer les passages de communication entre la poche principale (22) et la ou chaque poche latérale (23) se trouvant au-dessus de la cloison correspondante, **caractérisé en ce que** ladite ou chaque cloison (13) est telle que, dans ledit volume principal (14), à l'intersection entre la paroi latérale dudit moule (10) et de ladite cloison (13), se trouvent des réserves prévues pour pouvoir loger des plis de l'emballage (20).

2. Moule selon la revendication 1, **caractérisé en ce que**, pour former lesdites réserves, la ou chaque cloison (13) présente deux plis latéraux (13b) dirigés vers le fond du moule (10) de manière à former deux parties pliées latérales (13c) inclinées vers l'extrémité du moule (10).

3. Moule selon la revendication 2, **caractérisé en ce que** l'angle d'inclinaison desdites parties pliées (13c) est compris entre 15° et 30°.

4. Moule de pressage selon l'une des revendications précédentes, **caractérisé en ce que** ledit couvercle (40) est de longueur inférieure à la distance qui sépare deux cloisons transversales (13) ou une cloison (13) et une cloison d'extrémité.

5. Moule selon l'une des revendications précédentes, **caractérisé en ce que** ladite ou chaque cloison (13) est pourvue d'échancrures latérales (13a1) de manière à laisser libre le passage entre ladite cloison (13) et la paroi latérale dudit moule pour des rabats latéraux de l'emballage logé dans ledit moule.

6. Moule selon la revendication 5, **caractérisé en ce que** la longueur en développé de l'arête supérieure (13a) de la ou chaque cloison (13), d'une échancrure (13a1) à une autre échancrure (13a1), est supérieure à la largeur totale de la collerette (24) de l'emballage (20).

7. Ensemble empilable constitué d'une pluralité de moules montés sur un cadre pourvu de piétements (12), **caractérisé en ce que** chaque moule (10) est conforme à un moule selon une des revendications 1 à 6.
